# EUROPÄISCHE PATENTSCHRIFT

(11) **EP 3 160 023 B1**
(45) Veröffentlichungstag und Bekanntmachung des Hinweises auf die Patenterteilung: **09.10.2019**
(21) Anmeldenummer: 16180008.1
(22) Anmeldetag: 18.07.2016
(51) Int. Cl.: H02K 44/06

(54) **LOTPUMPE**
SOLDER PUMP
POMPE DE BRASSAGE

(30) Priorität: 21.10.2015 DE 102015220514
(43) Veröffentlichungstag der Anmeldung: 26.04.2017
(73) Patentinhaber: Ersa GmbH, 97877 Wertheim (DE)
(72) Erfinder: Hame, Simon, 97892 Kreuzwertheim (DE); Kressmann, Richard, 97299 Zell am Main (DE)
(74) Vertreter: DREISS Patentanwälte PartG mbB

(56) Entgegenhaltungen:
- CN-B- 101 382 153
- CN-U- 202 334 245
- JP-A- H05 161 340
- US-A- 2 099 593
- US-A1- 2004 213 858
- US-A1- 2009 285 695

## Beschreibung

Die Erfindung betrifft einen Löttiegel, insbesondere einen Selektivlöttiegel für eine Lötanlage zum selektiven Wellenlöten, umfassend eine Lotpumpe zum Fördern eines elektrisch leitfähigen Fluides, insbesondere eines flüssigen Lots, mit einem zumindest abschnittsweise entlang einer Kreisbahn verlaufenden Förderkanal mit einem Einlass und einem Auslass und mit einer Einrichtung zur Erzeugung eines bewegten Magnetfelds. Aus dem Stand der Technik sind derartige Lotpumpen bereits bekannt. Dabei umfasst die Einrichtung zur Erzeugung des bewegten Magnetfeldes wenigstens einen Elektromagneten.

Die Verwendung von Elektromagneten hat sich jedoch als nachteilig erwiesen, da die Lotpumpen einen vergleichsweise großen Bauraum einnehmen und da der Wirkungsgrad derartiger Lotpumpen, deren Einrichtung zur Erzeugung des bewegten Magnetfelds Elektromagneten aufweist, aufgrund der elektrischen Verluste aufgrund der Bestromung für die Elektromagneten bzw. für die elektrischen Spulen vergleichsweise schlecht ist. Die CN 101 382 153 B, die US 2009/285695 A1, die JP H05 161340 A und die CN 202 334 245 U zeigen Merkmale des Oberbegriffs des Anspruchs 1.

Der Erfindung liegt daher die Aufgabe zugrunde, eine Lotpumpe bereitzustellen, welche die genannte Nachteile vermeidet, und insbesondere eine Lotpumpe bereitzustellen, die eine verringerte Baugröße und einen verbesserten Wirkungsgrad aufweist.

Diese Aufgabe wird mit einem Löttiegel mit den Merkmalen des Anspruchs 1 gelöst.

Ein derartiger Löttiegel ist besonders vorteilhaft, da aufgrund der geringeren Baugröße der Lotpumpe der Löttiegel insgesamt einen kleineren Bauraum einnimmt und somit in einer Anlage zum selektiven Wellenlöten mehrere Löttiegel platzsparend auf einer Achse angeordnet werden können.

Nach Anspruch 1 ist vorgesehen, dass der Förderkanal auf seiner dem Permanentmagneten abgewandten Seite von einem ferromagnetischen Material begrenzt wird. Folglich kann vorgesehen sein, dass der Förderkanal aus einer Nut und einem die Nut abdeckenden Deckel aus ferromagnetischem Material gebildet wird. Ferner ist vorgesehen, dass der Förderkanal auf seiner dem Permanentmagneten zugewandten Seite von einem nicht ferromagnetischen Material begrenzt wird. Vorteilhafterweise kann dabei vorgesehen sein, dass der Förderkanal in das nicht ferromagnetische Material in Art einer Nut oder Ringnut eingebracht ist.

Aufgrund der Verwendung von Permanentmagneten zur Erzeugung des bewegten Magnetfelds kann eine Reduzierung der Baugröße sowie eine erhebliche Energieeinsparung erreicht werden, da einerseits der Wirkungsgrad der Pumpe aufgrund des Verzichts auf Elektromagneten erhöht werden kann und andererseits der Energieverbrauch einer Anlage zum bspw. selektiven Wellenlöten aufgrund der geringeren zu bewegenden Masse verringert werden kann.

Durch das bewegte Magnetfeld können im Betrieb der Lotpumpe in einem elektrisch leitfähigen Fluid insbesondere in einem flüssigen Lot, Wirbelströme erzeugt werden. Durch Erzeugung der Wirbelströme kann das elektrisch leitfähige Fluid bzw. das flüssige Lot in Bewegungsrichtung entlang des zumindest abschnittsweise entlang einer Kreisbahn verlaufenden Förderkanals beschleunigt werden und somit kann eine Pumpenwirkung der Lotpumpe bereitgestellt werden.

Durch die Anordnung eines magnetischen oder ferromagnetischen Materials auf der dem Permanentmagneten abgewandten Seite des Förderkanals kann die Ausbildung eines Magnetfelds im Förderkanal verbessert werden.

Durch Rotation des Permanentmagneten kann im Förderkanal, der zumindest abschnittsweise entlang einer Kreisbahn verläuft, ein rotierendes Magnetfeld erzeugt werden, dass sich zwischen dem magnetischen oder ferromagnetischen Material und dem Permanentmagneten ausbildet. Vorzugsweise verläuft der Förderkanal zwischen einem Einlass und einem Auslass entlang der Kreisbahn in einem Umfangswinkel im Bereich von 140 bis 350°, weiter vorzugsweise in einem Umfangswinkel im Bereich von 160° bis 350°.

Eine vorteilhafte Weiterbildung der Erfindung sieht vor, dass wenigstens zwei Permanentmagneten vorgesehen sind, die derart angeordnet sind, dass die Permanentmagneten dem Förderkanal mit einem voneinander verschiedenen Magnetpol zugewandt sind.

Besonders bevorzugt ist es dabei, wenn eine Vielzahl von Permanentmagneten vorgesehen ist, die dem Förderkanal alternierend mit einem voneinander verschiedenen Magnetpol zugewandt sind.

Um zu ermöglichen, dass die Permanentmagneten in einfacher Weise im Betrieb um die Rotationsachse rotieren können kann vorteilhafterweise vorgesehen sein, dass die Permanentmagneten auf einer Magnetkreisbahn angeordnet sind.

Besonders vorteilhaft ist es dabei, wenn die Magnetkreisbahn konzentrisch zur Kreisbahn des Förderkanals angeordnet ist.

In einer besonders leistungsfähigen Ausgestaltung des Löttiegels für große Volumenströme ist vorgesehen, dass der der Förderkanal von einem ferromagnetischen Material begrenzt wird, dass als halbezylindrische Hülse ausgebildet ist. Vorteilhafterweise wird der Förderkanal dabei einerseits von einer konvexen Außenseite eines hohlen Halbzylinders und andererseits von einer konkaven Innenseite einer halbzylindrischen Hülse aus ferromagnetischem Material begrenzt.

In einem nicht zur Erfindung gehörenden Gegenstand ist denkbar, dass der Förderkanal vollständig in nicht ferromagnetisches Material eingebracht ist und von dem nicht ferromagnetischen Material bis auf einen Einlass und einen Auslass vollständig begrenzt wird. In einer besonders einfachen Ausgestaltung des Löttiegels ist vorgesehen, dass der wenigstens eine Permanentmagnet axial unterhalb des Förderkanals angeordnet ist. Besonders bevorzugt ist es dabei, wenn der wenigstens eine Permanentmagnet oder die Vielzahl von Permanentmagneten auf einer Scheibe angeordnet sind, die zur Rotation um die Rotationsachse drehantreibbar ist und senkrecht zur Rotationsachse angeordnet ist.

In einer Weiterbildung des Löttiegels kann vorgesehen sein, dass der wenigstens eine Permanentmagnet radial innen neben dem Förderkanal angeordnet ist. Die radiale Richtung ist dabei eine Richtung senkrecht zur Rotationsachse, wobei eine axiale Richtung einer Richtung parallel zur Rotationsachse ist.

Es ist jedoch auch denkbar, dass der wenigstens eine Permanentmagnet radial außen neben dem Förderkanal angeordnet ist.

In einer vorteilhaften Weiterbildung des Löttiegels ist ein Elektromotor vorgesehen, wobei der wenigstens eine Permanentmagnet zur Rotation um die Rotationsachse von dem Elektromotor antreibbar ist.

Um eine möglichst gute Pumpenwirkung zu erzeugen und um das elektrisch leitfähige Fluid bzw. das flüssige Lot durch die erzeugten Wirbelströme möglichst gut beschleunigen zu können, ist es besonders vorteilhaft, wenn der Einlass und der Auslass an einander abgewandten Enden des Förderkanals angeordnet sind.

Weitere Einzelheiten und vorteilhafte Ausgestaltungen der Erfindung sind der nachfolgenden Beschreibung zu entnehmen, anhand derer die in den Figuren dargestellten Ausführungsformen der Erfindung näher beschrieben und erläutert sind.

Es zeigen:
- Figur 1: eine erste Ausführungsform einer Lotpumpe eines erfindungsgemäßen Löttiegels in einer Seitenansicht im Schnitt;
- Figur 2: einen Förderkanal der Lotpumpe gemäß Figur 1 in einer Draufsicht;
- Figur 3: eine Vielzahl auf einer Scheibe angeordneter Permanentmagnete der Lotpumpe gemäß Figur 1;
- Figur 4: eine zweite Ausführungsform einer Lotpumpe eines erfindungsgemäßen Löttiegels in einer Seitenansicht im Schnitt;
- Figur 5: einen Längsschnitt durch die Lotpumpe gemäß Figur 4;
- Figur 6: eine Lotpumpe (nicht Gegenstand der Erfindung) eines Löttiegels in einer Seitenansicht im Schnitt; und
- Figur 7: die Lotpumpe gemäß Figur 6 in einer Draufsicht im Schnitt.

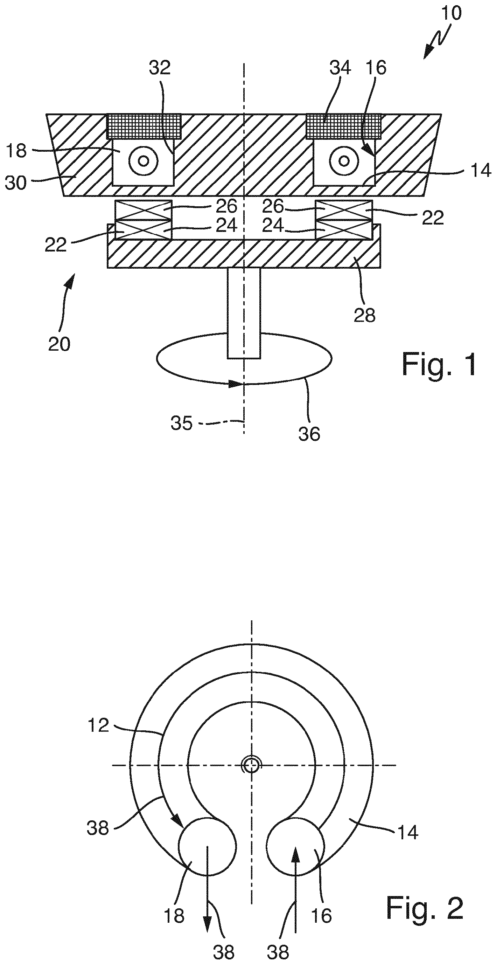

Figur 1 zeigt eine erste Ausführungsform einer Lotpumpe 10 eines erfindungsgemäßen Löttiegels in einer Seitenansicht im Schnitt. Die Lotpumpe 10 ist zum Fördern eines elektrisch leitfähigen Fluides, insbesondere zum Fördern eines flüssigen Lots ausgelegt. Eine derartige Lotpumpe 10 kann beispielsweise in einen Löttiegel einer Anlage zum selektiven Wellenlöten zum Fördern des flüssigen Lots eingebaut werden. Ein derartiger Löttiegel ist jedoch in den Figuren nicht dargestellt.

Die Lotpumpe 10 weist einen zumindest abschnittsweise entlang einer Kreisbahn 12 verlaufenden Förderkanal 14 mit einem Einlass 16 und einem Auslass 18 auf. Der Förderkanal 14 der Lotpumpe 10 ist in Figur 2 in einer Draufsicht gezeigt. Der Einlass 16, der Auslass 18 sowie die Kreisbahn 12 sind dabei deutlich zu erkennen. Der Einlass und der Auslass 18 sind an den einander abgewandten Enden des Förderkanals 14 angeordnet.

Die Lotpumpe 10 weist ferner eine Einrichtung 20 zur Erzeugung eines rotierenden Magnetfelds auf. Diese Einrichtung 20 umfasst wenigstens einen Permanentmagneten 22. In der Ausführungsform gemäß der Figuren 1 bis 3 umfasst die Lotpumpe 10 bzw. die Einrichtung 20 eine Vielzahl von Permanentmagneten 22, die dem Förderkanal 14 alternierend mit einem voneinander verschiedenen Magnetpol zugewandt sind.

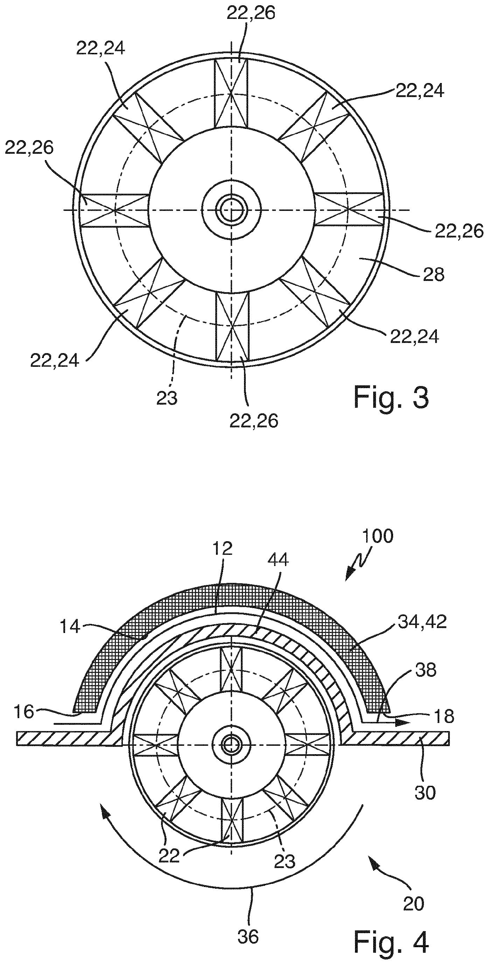

Eine derartige Anordnung einer Vielzahl von Permanentmagneten 22 ist in der Draufsicht gemäß Figur 3 deutlich zu erkennen. Die Permanentmagnete 22 sind dabei auf einer Magnetkreisbahn 23 angeordnet, die konzentrisch zur Kreisbahn 12 des Förderkanals 14 angeordnet ist. Die alternierend angeordneten Permanentmagnete 22 sind dabei deutlich zu erkennen, wobei jeweils ein Permanentmagnet 22 mit einem Südpol 26 nach oben, d.h. dem Förderkanal 14 zugewandt angeordnet ist und der daneben angeordnete Permanentmagnet mit einem Nordpol 24 nach oben d.h. angeordnet ist. Die Permanentmagnete 22 sind in Figur 3 auf einer Magnetscheibe 28 montiert, die ebenfalls deutlich in Figur 1 zu erkennen ist.

Der Förderkanal 14 wird, wie in Figur 1 zu erkennen ist, von einem nicht ferromagnetischen Material 30 begrenzt, in das eine Nut 32 eingebracht ist. Diese Nut 32 wird von einem Ring 34 aus ferromagnetischem Material verschlossen, wobei der Förderkanal 14 insgesamt von dem nicht ferromagnetischen Material 30 und dem Ring 34 begrenzt wird.

Die Einrichtung 20 zur Erzeugung eines bewegten Magnetfeldes ist derart ausgelegt, dass die Permanentmagnete 22 im Betrieb um eine konzentrisch zur Kreisbahn 12 oder Magnetkreisbahn 23 angeordnete Rotationsachse 35 rotieren. Durch Rotation der axial (parallel zur Richtung der Rotationsachse 35) unterhalb des Förderkanals 14 angeordneten Permanentmagnete 22 kann im Förderkanal 14 ein rotierendes Magnetfeld erzeugt werden, dass sich zwischen dem magnetischen oder ferromagnetischen Material 34 und den Permanentmagneten 22 ausbildet. Durch das rotierende Magnetfeld können im Betrieb der Lotpumpe 10 in einem elektrisch leitfähigen Fluid insbesondere in einem flüssigen Lot, Wirbelströme erzeugt werden. Durch Erzeugung der Wirbelströme kann das elektrisch leitfähige Fluid bzw. das flüssige Lot entlang einer durch den Pfeil 36 in Figur 1 oder durch die Pfeile 38 in Figur 2 dargestellten Rotationsrichtung entlang des zumindest abschnittsweise entlang der Kreisbahn 12 verlaufenden Förderkanals 14 beschleunigt werden und somit kann eine Pumpenwirkung der Lotpumpe 10 bereitgestellt werden.

Zum Antrieb der Magnetscheibe 28 weist die Lotpumpe 10 einen in den Figuren nicht dargestellten Elektromotor auf, welcher die Magnetscheibe 28 bzw. die Permanentmagnete 22 derart antreibt, dass diese um die Rotationsachse 35 rotieren.

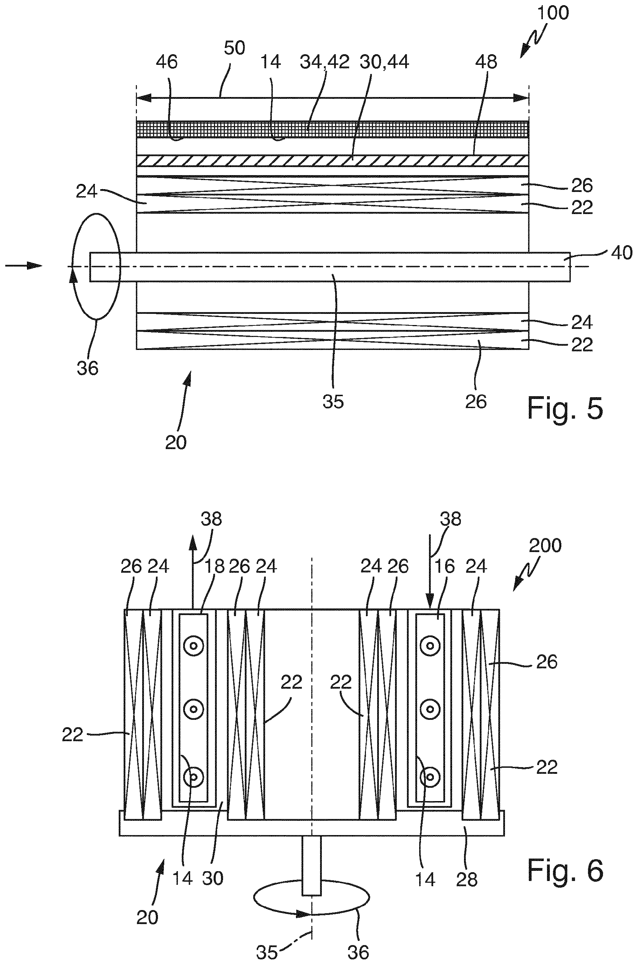

Figur 4 zeigt eine zweite Ausführungsform einer erfindungsgemäßen Lotpumpe 100 in einer Seitenansicht im Schnitt, wobei Figur 5 einen Längsschnitt durch die Lotpumpe 100 gemäß Figur 4 zeigt. Die den Figuren 1 bis 3 entsprechenden Elemente und Bauteile sind dabei mit den entsprechenden Bezugszeichen gekennzeichnet.

Bei der zweiten Ausführungsform der Lotpumpe 100 ist eine Vielzahl von Permanentmagneten 22 vorgesehen, die von einer Welle 40, welche wiederum von einem nicht dargestellten Elektromotor antreibbar ist, zur Rotation um die Rotationsachse 35 in Richtung des Pfeils 36 antreibbar sind. Die Permanentmagneten 22 sind dabei konzentrisch zur Rotationsachse 35 angeordnet, wobei jeweils ein Permanentmagnet 22 mit einem Südpol 26 nach radial außen (senkrecht zur Rotationsachse 35) und der daneben angeordnete Permanentmagnet 22 mit einem Nordpol 24 nach radial außen (senkrecht zur Rotationsachse 35) angeordnet ist.

Der Förderkanal 14 wird bei der Lotpumpe 100 von einem ferromagnetischen Material 34 begrenzt, das als halbzylindrische Hülse 42 ausgebildet ist. Der Förderkanal 14 wird ferner von einem konvexen hohlen Halbzylinder 44 begrenzt, so dass sich der Förderkanal 14 zwischen einer konkaven Innenseite 46 der Hülse 42 und einer konvexen Außenseite 48 des Halbzylinders 44 ausbildet. Die Ausgestaltung der Lotpumpe 100 gemäß den Figuren 4 und 5 entspricht weitgehend der Ausgestaltung der Lotpumpe 10 gemäß den Figuren 1 bis 3. Die Lotpumpe 100 ist jedoch aufgrund einer großen Breite 50 des Förderkanals 14, welche in Figur 5 deutlich zu erkennen ist, für große Volumenströme eines elektrisch leitfähigen Fluides bzw. eines flüssigen Lots besonders geeignet.

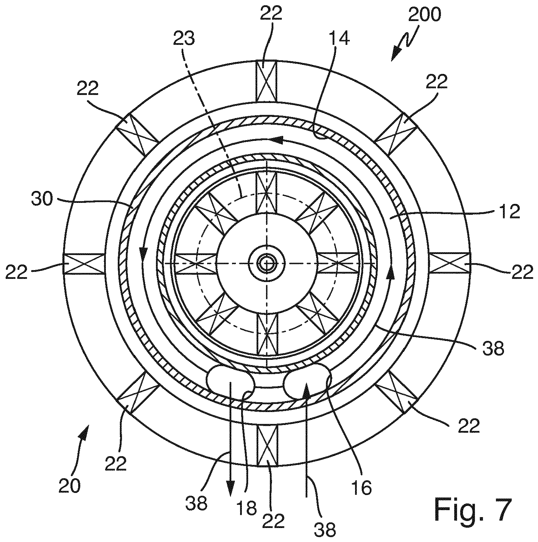

Figur 6 zeigt eine Lotpumpe 200 (nicht Gegenstand der Erfindung) in einer Seitenansicht im Schnitt, wobei Figur 7 die Lotpumpe 200 gemäß Figur 6 in einer Draufsicht im Schnitt zeigt. Die den Figuren 1 bis 5 entsprechenden Elemente und Bauteile sind dabei mit den entsprechenden Bezugszeichen gekennzeichnet.

Die Lotpumpe 200 weist ebenfalls eine Vielzahl von Permanentmagneten 22 auf, die auf einer Magnetscheibe 28 angeordnet sind. Zum Antrieb der Magnetscheibe 28 weist die Lotpumpe 200 auch einen in den Figuren nicht dargestellten Elektromotor auf, welcher die Magnetscheibe 28 bzw. die Permanentmagnete 22 derart antreibt, dass diese um die Rotationsachse 35 rotieren.

Im Gegensatz zur Lotpumpe 10 der Figuren 1 bis 3 sind die Permanentmagnete 22 sowohl radial innen (senkrecht zur Rotationsachse 35) neben dem Förderkanal 14 angeordnet als auch radial außen (senkrecht zur Rotationsachse 35) neben dem Förderkanal angeordnet. Der Förderkanal 14 wird bis auf den Einlass 16 und den Auslass 18 vollständig von einem nicht ferromagnetischen Material 30 begrenzt. Die Permanentmagnete 22 sind sowohl radial innen als auch radial außen derart angeordnet, dass sie alternierend mit einem Südpol 26 oder einem Nordpol 24 dem Förderkanal 14 zugewandt sind. Wie in Figur 6 deutlich zu erkennen ist, sind die radial innen angeordneten Permanentmagnete 22 derart gegenüber den radial außen angeordneten Permanentmagneten 22 angeordnet, dass sich auf beiden Seiten des Förderkanals 14 jeweils ein Nordpol 24 und ein Südpol 26 der gegenüberliegenden Permanentmagnete 22 gegenüberliegen.

Durch Rotation der Magnetscheibe 28 bzw. der Permanentmagnete 22 kann im Förderkanal 14 ein rotierendes Magnetfeld erzeugt werden, das sich zwischen den jeweiligen Nord- und Südpolen 24, 26 der Permanentmagnete 22 ausbildet. Da der magnetische Fluss jeweils zwischen den Nord- und Südpolen 24, 26 erzeugt wird, kann insgesamt eine Lotpumpe 200 mit einer besonders großen Förderwirkung bereitgestellt werden.

## Patentansprüche

1. Löttiegel, insbesondere Selektivlöttiegel für eine Lötanlage zum selektiven Wellenlöten,
umfassend eine Lotpumpe (10, 100) zum Fördern eines elektrisch leitfähigen Fluides, insbesondere eines flüssigen Lots, die mit einem zumindest abschnittsweise entlang einer Kreisbahn (12) verlaufenden Förderkanal (14) mit einem Einlass (16) und einem Auslass (18) und mit einer Einrichtung (20) zur Erzeugung eines bewegten Magnetfelds ausgestattet ist, wobei die Einrichtung (20) wenigstens einen Permanentmagneten (22) umfasst und derart ausgelegt ist, dass der Permanentmagnet (22) im Betrieb entlang des Förderkanals (14) bewegt wird, und im Betrieb um eine konzentrisch zur Kreisbahn (12) angeordnete Rotationsachse (35) rotiert,
**dadurch gekennzeichnet,**
**dass** der Förderkanal (14) auf seiner dem Permanentmagneten (22) abgewandten Seite von einem ferromagnetischen Material (34) begrenzt wird und dass der Förderkanal (14) auf seiner dem Permanentmagneten zugewandten Seite von einem nicht ferromagnetischen Material (30) begrenzt wird.

2. Löttiegel nach Anspruch 1, **dadurch gekennzeichnet, dass** die Einrichtung (20) wenigstens zwei Permanentmagneten (22) aufweist, die derart angeordnet sind, dass die Permanentmagneten (22) dem Förderkanal (14) mit einem voneinander verschiedenen Magnetpol (24, 26) zugewandt sind.

3. Löttiegel nach Anspruch 1 oder 2, **dadurch gekennzeichnet, dass** die Einrichtung (20) eine Vielzahl von Permanentmagneten (22) aufweist, die dem Förderkanal (14) alternierend mit einem voneinander verschiedenen Magnetpol (24, 26) zugewandt sind.

4. Löttiegel nach Anspruch 2 oder 3, **dadurch gekennzeichnet, dass** die Permanentmagneten (22) auf einer Magnetkreisbahn (23) angeordnet sind.

5. Löttiegel nach Anspruch 4, **dadurch gekennzeichnet, dass** die Magnetkreisbahn (23) konzentrisch zur Kreisbahn (12) des Förderkanals (14) angeordnet ist.

6. Löttiegel nach wenigstens einem der vorhergehenden Ansprüche, **dadurch gekennzeichnet, dass** der wenigstens eine Permanentmagnet (22) axial unterhalb des Förderkanals (14) angeordnet ist.

7. Löttiegel nach wenigstens einem der vorhergehenden Ansprüche, **dadurch gekennzeichnet, dass** ein Elektromotor vorgesehen ist, wobei der wenigstens eine Permanentmagnet (22) zur Rotation um die Rotationsachse (35) von dem Elektromotor antreibbar ist.

8. Löttiegel nach wenigstens einem der vorhergehenden Ansprüche, **dadurch gekennzeichnet, dass** der Einlass (16) und der Auslass (18) an einander abgewandten Enden des Förderkanals (14) angeordnet sind.

## Claims

1. Solder pot, in particular a selective solder pot for a soldering system for selective wave soldering, comprising a solder pump (10, 100) for conveying an electrically conductive fluid, in particular a liquid solder, which pump is equipped with a conveyor channel (14), which extends along a circular path (12) at least in portions and has an inlet (16) and an outlet (18), and with a device (20) for generating a moving magnetic field,
the device (20) comprising at least one permanent magnet (22) and being designed such that the permanent magnet (22) is moved along the conveyor channel (14) during operation, and during operation rotates about an axis of rotation (35) which is arranged concentrically to the circular path (12),
**characterized in that** the conveyor channel (14), on the side thereof which faces away from the permanent magnet (22), is delimited by a ferromagnetic material (34), and **in that** the conveyor channel (14), on the side thereof which faces the permanent magnet, is delimited by a non-ferromagnetic material (30).

2. Solder pot according to claim 1, **characterized in that**
the device (20) has at least two permanent magnets (22) which are arranged such that the permanent magnets (22) each face the conveyor channel (14) with a different magnetic pole (24, 26).

3. Solder pot according to claim 1 or claim 2, **characterized in that** the device (20) has a plurality of permanent magnets (22) which each face the conveyor channel (14) with a different magnetic pole (24, 26) in an alternating manner.

4. Solder pot according to claim 2 or claim 3, **characterized in that** the permanent magnets (22) are arranged on a magnetic circular path (23).

5. Solder pot according to claim 4, **characterized in that**
the magnetic circular path (23) is arranged concentrically to the circular path (12) of the conveyor channel (14).

6. Solder pot according to at least one of the preceding claims, **characterized in that** the at least one permanent magnet (22) is arranged axially below the conveyor channel (14).

7. Solder pot according to at least one of the preceding claims, **characterized in that** an electric motor is provided, the at least one permanent magnet (22) being drivable by the electric motor for rotation about the rotation axis (35).

8. Solder pot according to at least one of the preceding claims, **characterized in that** the inlet (16) and the outlet (18) are arranged at opposite ends of the conveyor channel (14).

## Revendications

1. Creuset de brasage, en particulier creuset de brasage sélectif pour une installation de brasage destinée au brasage à la vague sélectif,
comprenant une pompe à métal d'apport de brasage (10, 100) destinée à refouler un fluide électro-conducteur, en particulier un métal d'apport de brasage liquide, qui est équipée d'un canal de refoulement (14), avec une entrée (16) et une sortie (18), s'étendant au moins en partie le long d'un carrousel (12) et d'un dispositif (20) destiné à produire un champ magnétique mobile, dans lequel le dispositif (20) comprend au moins un aimant permanent (22) et est configuré de telle sorte que l'aimant permanent (22) est déplacé le long du canal de refoulement (14) durant le fonctionnement, et est amené en rotation autour d'un axe de rotation (35) disposé de manière concentrique par rapport au carrousel (12) durant le fonctionnement,
**caractérisé**
**en ce que** le canal de refoulement (14) est délimité sur sa face opposée à l'aimant permanent (22) par un matériau ferromagnétique (34) et **en ce que** le canal de refoulement (14) est délimité sur sa face tournée vers l'aimant permanent par un matériau (30) non ferromagnétique.

2. Creuset de brasage selon la revendication 1, **caractérisé**
**en ce que** le dispositif (20) présente au moins deux aimants permanents (22), qui sont disposés de telle sorte que les aimants permanents (22) sont tournés vers le canal de refoulement (14) avec un pôle magnétique (24, 26) différent l'un de l'autre.

3. Creuset de brasage selon la revendication 1 ou 2, **caractérisé en ce que** le dispositif (20) présente une pluralité d'aimants permanents (22), qui sont tournés vers le canal de refoulement (14) en alternance avec un pôle magnétique (24, 26) différent l'un de l'autre.

4. Creuset de brasage selon la revendication 2 ou 3, **caractérisé en ce que** les aimants permanents (22) sont disposés sur un carrousel magnétique (23).

5. Creuset de brasage selon la revendication 4, **caractérisé en ce que** le carrousel magnétique (23) est disposé de manière concentrique par rapport au carrousel (12) du canal de refoulement (14).

6. Creuset de brasage selon au moins l'une des revendications précédentes, **caractérisé en ce que** l'au moins un aimant permanent (22) est disposé axialement au-dessous du canal de refoulement (14).

7. Creuset de brasage selon au moins l'une des revendications précédentes, **caractérisé en ce qu'**un moteur électrique est prévu, dans lequel l'au moins un aimant permanent (22) peut être entraîné par le moteur électrique pour tourner autour de l'axe de rotation (35) .

8. Creuset de brasage selon au moins l'une des revendications précédentes, **caractérisé en ce que** l'entrée (16) et la sortie (18) sont disposées aux extrémités opposées l'une à l'autre du canal de refoulement (14).
